# EUROPEAN PATENT APPLICATION

(11) **EP 2 034 601 A1**
(43) Date of publication of application: **11.03.2009**
(21) Application number: 06767426.7
(22) Date of filing: 27.06.2006
(51) Int. Cl.: H02M 7/48

(54) **POWER CONVERTER**

(71) Applicant: Mitsubishi Electric Corporation, Chiyoda-ku Tokyo 100-8310 (JP)
(72) Inventor: KITANAKA, Hidetoshi, Tokyo 100-8310 (JP)
(74) Representative: Popp, Eugen
(86) International application number: PCT/JP2006/312809
(87) International publication number: WO 2008/001427

(57) **Abstract**

There are provided an electric power converter in which common-mode noise is suppressed without causing enlargement of components, increase in the number of components, a cost hike, and the like. The electric power converter is provided with a capacitor (12) connected with the input terminal of the inverter circuit (13a), a noise suppressionmeans (10a, 10b) that is provided around at least one of input-side conductors connected with the input terminals of the inverter circuit (13a) and output-side conductors connected with the output terminals of the inverter circuit (13a), an electric quantity detector (11, 19a, 19b, 19c) that is provided in the input-side conductors or the output-side conductors at a position opposite to the inverter circuit with respect to the noise suppression means (10a, 10b), and a control unit (20) that controls the inverter circuit (13b), based on an electric quantity detection signal from the electric quantity detector.

## Description

### Technical Field

The present invention relates to an electric power converter provided with an inverter circuit that converts DC power supplied to the input thereof into AC power and supplies the AC power to a load connected to the output thereof.

### Background Art

To date, electric power converters provided with an inverter circuit configured with semiconductor switching devices have been utilized in a great number of industrial fields such as the electric vehicle industry and the automobile industry. For example, there exists an electric power converter (e.g., refer to Patent Document 1) that is mounted in an electric vehicle and provided with an inverter circuit whose input is connected to an overhead line via a power collector and whose output is connected to a main motor that drives the electric vehicle; cores formed of a noise-suppression magnetic material are provided around the input conductors and around the output conductors of the inverter circuit.

Additionally, there exists an electric power converter (e.g., refer to Patent Document 2) that is mounted in an electric vehicle and in which a voltage detector is connected to the input of an inverter circuit and a current detector is connected to the output of the inverter circuit, and based on a voltage detection signal and a current detection signal from the detectors, the inverter circuit is controlled.

[Patent Document 1] Japanese Patent Application Laid-Open No. 2004-187368
[Patent Document 2] Japanese Patent No. 3747858

### Disclosure of the Invention

### Problems to be Solved by the Invention

In recent years, the operating voltage of a microcomputer incorporated in a control unit of an electric power converter has been lowered in order to reduce power consumption due to high-speed processing. In the past, approximately 5-volt microcomputers were utilized; however, in recent years, approximately 1-volt to 3-volt low-voltage-operation microcomputers have been utilized. Accordingly, in order to prevent erroneous operation of a control unit and to realize stable operation of an electric power converter, it is required to suppress a common-mode noise current in the control unit.

It is conceivable that, in order to effectively suppress a common-mode noise current in a control unit, there are taken measures such as increasing the impedances, against the common-mode noise current, of the voltage detector and the current detector provided at the input side and the output side of an inverter circuit and increasing the impedance of an insulated amplifier disposed at the input side of the control unit that controls the inverter circuit; however, taking the foregoing measures causes enlargement of components, increase in the number of components, a cost hike, and the like.

The objective of the present invention is to obtain an electric power converter that can ensure stable operation, even in the case where there is utilized, for example, a microcomputer that suppresses a common-mode noise current in a control unit, without causing enlargement of components, increase in the number of components, a cost hike, and the like, and operates with a relatively low voltage.

### Means for Solving the Problems

An electric power converter according to the present invention is provided with an inverter circuit that converts DC power supplied to input terminals thereof into AC power and supplies the AC power to a load connected with output terminals thereof, a capacitor connected with the input terminal of the inverter circuit, a noise suppression means that is provided around at least one of input-side conductors connected with the input terminals of the inverter circuit and output-side conductors connected with the output terminals of the inverter circuit, an electric quantity detector that is provided in the input-side conductors or the output-side conductors at a position opposite to the inverter circuit with respect to the noise suppression means, and a control unit that controls the inverter circuit, based on an electric quantity detection signal from the electric quantity detector.

### Advantages of the Invention

An electric power converter according to the present invention can suppress a common-mode noise current in a control unit, without causing enlargement of components, increase in the number of components, a cost hike, and the like; therefore, the electric power converter according to the present invention can ensure stable operation even in the case where a microcomputer that operates with a relatively low voltage is utilized.

### Brief Description of the Drawings

FIG. 1 is a block diagram illustrating an electric power converter according to Embodiment 1 of the present invention;
FIG. 2 is a block diagram illustrating an electric power converter according to Embodiment 2 of the present invention;
FIG. 3 is an explanatory diagram illustrating an equivalent circuit for a common-mode noise current in an electric power converter according to any one of Embodiments 1 and 2 of the present invention;
FIG. 4 is a block diagram illustrating an electric power converter according to technology 1 as a basis of the present invention;
FIG. 5 is a block diagram illustrating an electric power converter according to technology 2 as a basis of the present invention; and
FIG. 6 is an explanatory diagram illustrating an equivalent circuit for a common-mode noise current in an electric power converter according to any one of technology 1 and technology 2 as bases of the present invention.

### Description of Reference numerals

- 1:: OVERHEAD LINE
- 2:: POWER COLLECTOR
- 3:: REACTOR
- 4:: WHEEL
- 5:: RAIL
- 6:: ELECTRIC POWER CONVERTER
- 7:: THREE-PHASE AC MOTOR
- 10a:: FIRST CORE
- 10b:: SECOND CORE
- 11:: VOLTAGE DETECTOR
- 12:: CAPACITOR
- 13a, 13b:: INVERTER MODULE
- SU, SV, SW, SX, SY, SZ:: SWITCHING DEVICE
- 19a, 19b, 19c:: CURRENT DETECTOR
- 20:: CONTROL UNIT
- 22a, 22b, 22c, 22d:: INSULATED AMPLIFIER
- 30:: DISCHARGING RESISTOR
- 31:: DISCHARGING DEVICE

### Best Mode for Carrying Out the Invention

Prior to explanations for Embodiments of the present invention, technologies as bases of the present invention will be explained.

### [Technology 1 as Basis of the Present Invention]

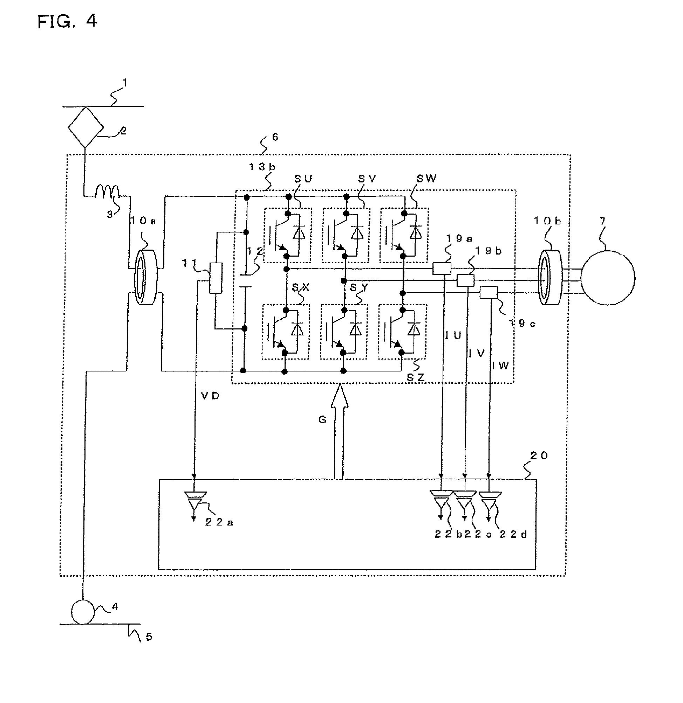

FIG. 4 is a block diagram illustrating an electric power converter according to technology 1 as a basis of the present invention; FIG. 4 illustrates an example of electric power converter mounted in an electric vehicle. In FIG. 4, DC power is supplied from an overhead line 1 to an electric power converter 6 mounted in an electric vehicle, via a power collector 2. A switch (unillustrated) and a smoothing circuit configured with a reactor 3 and a capacitor 12 are connected to the power collector 2. An inverter module 13b as an inverter circuit is provided with a three-phase bridge circuit configured with switching devices SU, SV, SW, SX, SY, and SZ; the DC-side terminals as the input side of the inverter module 13b are connected across the capacitor 12, and AC-side terminals for U-phase, V-phase, and W-phase as the output side of the inverter module 13b are connected to respective input terminals of a three-phase AC motor 7 (referred to as a motor, hereinafter) that drives an electric vehicle.

A voltage detector 11 that detects a voltage across the capacitor 12 is connected between the DC-side terminals of the inverter module 13b; current detectors 19a, 19b, and 19c that detect output currents for respective phases are connected to the AC-side terminals of the inverter module 13b; the negative-pole terminal out of the DC-side terminals of the inverter module 13b is connected to a rail 5 via a wheel 4 of the electric vehicle. The inverter module 13b converts DC power supplied from the capacitor 12 into AC power and outputs the AC power to the motor 7. In addition, when the electric vehicle is braked in a regenerative manner, the inverter module 13b converts AC power generated by the motor 7 into DC power and outputs the DC power to the capacitor 12.

A voltage detection signal VD from the voltage detector 11 that detects the voltage across the capacitor 12 and current detection signals IU to IW from the current detectors 19a to 19c that detect the currents at the output-side of the inverter module 13b are inputted to a control unit 20 via insulated amplifiers 22a, 22b, 22c, and 22d. The control unit 20 generates a gate signal G, based on the foregoing signals and an unillustrated command inputted from the outside, and outputs the gate signal G to the gates of the switching devices SU to SZ.

The switching devices SU to SZ supply three-phase AC power, which is controlled based on the gate signal and undergoes pulse width modulation (referred to as PWM, hereinafter) control, to the motor 7 so that the motor 7 is controlled to generate desired torque. The control unit 20 incorporates a microcomputer (referred to as a micon, hereinafter) and is controlled with software.

A first core 10a, which is formed of a magnetic material such as ferrite or amorphous metal and hollow, ring-shaped, is provided at the DC side, i.e., at the input-side of the inverter module 13b; a pair of conductive leads at the DC-side of the inverter module 13b penetrates the inner space of the first core 10a. A second core 10b, which is formed of a magnetic material such as ferrite or amorphous metal and hollow, ring-shaped, is provided at the output-side of the inverter module 13b; conductive leads for U-phase, V-phase, and W-phase at the output-side of the inverter module 13b penetrate the inner space of the second core 10b.

In practice, the first and second cores 10a and 10b are each configured with a plurality of cores in series and have a relatively large size. Accordingly, the first and second cores are not disposed inside the inverter module 13b, but inside a metal case that has a relatively large space and incorporates the electric power converter 6 configured with the inverter module 13b, the control unit 20, the capacitor 11, and the reactor 3. In addition, the current detectors 19a to 19c and the voltage detector 11 are also included in the metal case that incorporates the electric power converter 6.

The voltage detector 11 is connected between the input-side conductors of the inverter module 13b, at the output side of the first core 10a, i.e., at the inverter module 13b side of the first core 10a. The current detectors 19a to 19c are disposed on the output-side conductors of the inverter module 13b, at the input side of the second core 10b, i.e., at the inverter module 13b side of the second core 10b.

As described above, the current detection signals IU, IV, and IW obtained from the current detectors 19a to 19c are utilized for controlling the motor 7; also in the case where an abnormality such as a short circuit or a short-to-ground fault occurs at the AC-side terminals, i.e., at the output-side conductors of the inverter module 13b, the current detection signals IU, IV, and IW are utilized for performing protective operation, by securely detecting the abnormality and making the control unit 20 interrupt the switching operations of the switching devices SU to SZ. Accordingly, the current detectors 19a to 19c are disposed in the vicinity of the switching devices SU to SZ inside the inverter module 13b so that an abnormal current in the output line of the inverter module 13b can be detected in as wide a range as possible. Due to its function of detecting the voltage across the capacitor 12, the voltage detector 11 is disposed in the immediate vicinity of the capacitor 12.

The electric power converter 6 configured as described above is characterized by having a large control capacity of approximately 1 [MVA] and a high circuit voltage of approximately 600 [V] to 3000 [V]; thus, in the case where the switching devices SU to SZ inside the inverter module 13b perform switching operations, the voltage at the circuit in the vicinity of the switching devices changes from approximately 0 [V] to approximately 3000 [V] in several microseconds. The voltage change causes a high-frequency leakage current to occur through stray capacitances in the circuitry. The leakage current outflows from and flows into the electric power converter 6. A leakage current of this kind is referred to as a common-mode noise current.

In many cases, the electric power converter 6 is mounted under the floor of a vehicle; when a common-mode noise current outflows from the case of the electric power converter 6 to the vehicle body, there is formed a large loop circuit in which the common-mode noise current flows; therefore, high-frequencymagnetic flux caused by the common-mode noise current may adversely affect signal apparatuses (unillustrated) installed in the vicinity of a rail. The first core 10a and the second core 10b in the electric power converter 6 are provided in order to avoid the foregoing adverse effect, and operate as noise suppression means that suppress the outflow of a common-mode noise current.

That is to say, as described above, the inner space of the first core 10a is penetrated by a pair of conductors at the input-side of the inverter module 13b, and the inner space of the second core 10b is penetrated by three conductors at the output-side of the inverter module 13b. Therefore, the first core 10a and the second core 10b each generate impedance against common-mode noise currents that flow in a plurality of conductors that penetrate the respective cores so as to suppress the commion-mode noise currents. In general, the first core 10a and the second 10b are each configured with a plurality of cores in series, in order to fulfill the request for reduction of a common-mode noise current.

### [Technology 2 as Basis of the Present Invention]

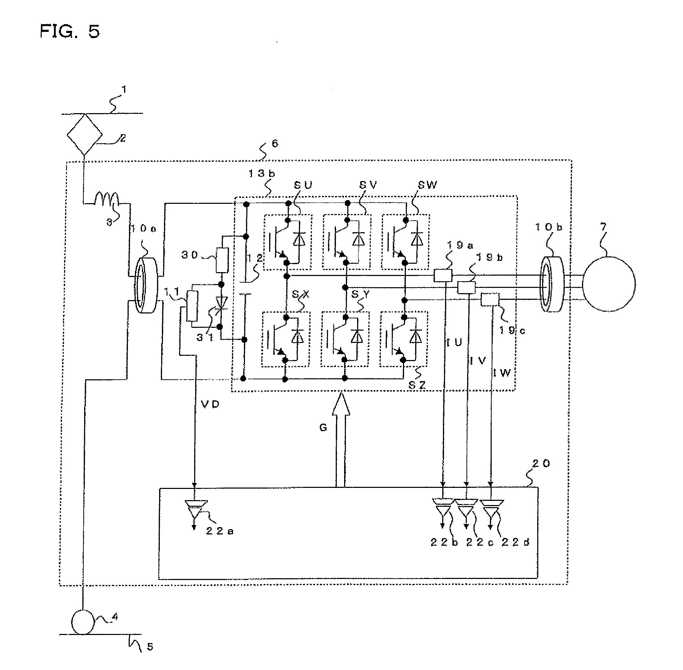

FIG. 5 is a block diagram illustrating an electric power converter according to technology 2 as a basis of the present invention. In FIG. 5, a discharging resistor 30 and a discharging device 31 are connected in series and configure an overvoltage-suppression discharging circuit. The overvoltage-suppression discharging circuit is connected in parallel with the capacitor 12. The voltage detector 11 is connected across the discharging device 31. Other configurations are the same as those in technology 1 as a basis of the present invention.

In the case where the voltage across the capacitor 12 becomes excessively high, the overvoltage-suppression discharging circuit configured with the discharging resistor 30 and the discharging device 31 makes the discharging device 31 turn on so as to discharge electric charges on the capacitor 12 through the discharging resistor 30. As a result, the inverter module 13b can be prevented from being broken by the overvoltage.

The reason why the voltage detector 11 is connected across the discharging device 31 is that the voltage detector 11 has not only a function of detecting the voltage across the capacitor 12 but also a function of ascertaining the operation of the discharging device 31. In a normal condition (when the discharging device is off), the foregoing configuration enables the voltage detector 11 to detect the voltage across the capacitor 12, and upon the occurrence of an overvoltage (when the discharging device turns on), the detection value of the voltage detector 11 becomes zero, whereby the control unit 20 can be aware of the fact that the discharging device 31 has turned on; therefore, it is made possible to monitor whether or not the discharging device 31 operates normally. In addition, because the inverter module 13b is interrupted when an overvoltage occurs, no problem in the controlling operation is posed even though the detection value of the voltage detector 11 becomes zero.

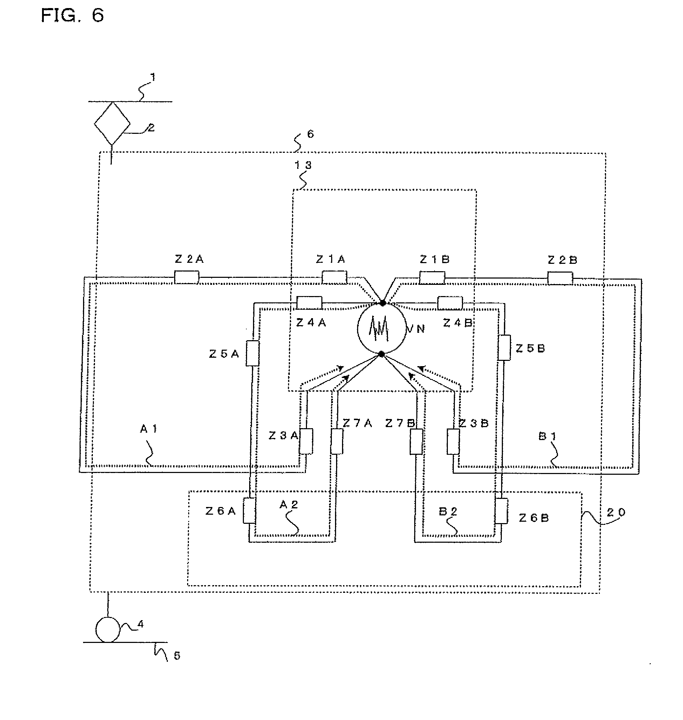

FIG. 6 is an explanatory diagram illustrating an equivalent circuit for a common-mode noise current in any one of technology 1 and technology 2, illustrated in FIGS. 4 and 5, as bases of the present invention. In addition, in order to comprehend the phenomenon, the equivalent circuit illustrated in FIG. 6 is represented in a simplified manner, without impairing the physical significance. In FIG. 6, VN denotes a common-mode noise voltage generated by a voltage change due to the switching operations of the switching devices SU to SZ; as the paths of a common-mode noise current generated by the common-mode noise voltage VN, four paths A1, A2, B1, and B2 are conceivable.

### (1) Path A1

The path A1 is formed of a series circuit including an impedance Z1A between the switching devices SU to SZ and the first core 10a, an impedance Z2A of the first core 10a, and an impedance Z3A of a circuit whose route starts from the first core 10a and returns to the source of common-mode noise via the outside of the electric power converter 6 or the case of the electric power converter 6.

### (2) Path A2

The path A2 is formed of a series circuit including an impedance Z4A between the switching devices SU to SZ and the voltage detector 11, an impedance Z5A of the voltage detector 11, an impedance Z6A of a circuit that starts from the voltage detector 11 and leads to the control unit 20 via the insulated amplifier 22a, and an impedance Z7A of a circuit that starts from the control unit 20 and returns to the source of common-mode noise via the case of the electric power converter 6. In addition, because the distance between the switching devices SU to SZ and the first core 10a is longer than the distance between the switching devices SU to SZ and the voltage detector 11, Z1A is larger than Z4A.

### (3) Path B1

The path B1 is formed of a series circuit including an impedance Z1B between the switching devices SU to SZ and the second core 10b, an impedance Z2B of the second core 10b, and an impedance Z3B of a circuit whose route starts from the second core 10b and returns to the source of common-mode noise via the outside of the electric power converter 6 or the case of the electric power converter 6.

### (4) Path B2

The path B2 is formed of a series circuit including an impedance Z4B between the switching devices SU to SZ and the current detectors 19a to 19c, an impedance Z5B of the current detectors 19a to 19c, an impedance Z6B of a circuit that starts from the current detectors 19a to 19c and leads to the control unit 20 via the insulated amplifiers 22b to 22d, an impedance Z7B of a circuit that starts from the control unit 20 and returns to the source of common-mode noise via the case of the electric power converter 6. In addition, because the distance between the switching devices SU to SZ and the second core 10b is longer than the distance between the switching devices SU to SZ and the current detectors 19a to 19c, Z1B is larger than Z4B.

As can be seen from FIG. 6, common-mode noise currents that flow toward the outside of the electric power converter 6 through the paths A1 and B1 are suppressed by the impedances Z2A and Z2B of the first and second cores 10a and 10b; therefore, the common-mode noise currents are suppressed from widely flowing toward the vehicle body or the like outside the electric power converter 6, whereby the common-mode noise current is suppressed from flowing in a large loop circuit. As a result, because high-frequency magnetic flux generated by the common-mode noise current can be reduced, the adverse effect thereof on signal apparatuses (unillustrated) installed in the vicinity of a rail can be reduced.

As described above, common-mode noise currents that flow toward the outside of the electric power converter 6 through the paths A1 and B1 can be suppressed by the first and second cores 10a and 10b; however, common-mode noise currents that flow in the control unit 20 inside the electric power converter 6 through the paths A2 and B2 cannot be suppressed. However, in order to prevent erroneous operation of the control unit 20 so as to ensure stable operation of the electric power converter 6, it is indispensable to suppress the common-mode noise currents that flow through the paths A2 and B2.

Accordingly, in order to increase the impedances Z5A and Z5B, against common-mode noise currents, of the voltage detector 11 and the current detectors 19a to 19c, noise suppression means (unillustrated) are provided in the voltage detector 11 or the current detectors 19a to 19c, or the insulated amplifiers 22a to 22d are provided at the input side of the control unit 20 and are made to function as impedances Z6A and Z6B, so that common-mode noise currents that flow through the paths A2 and B2 are suppressed.

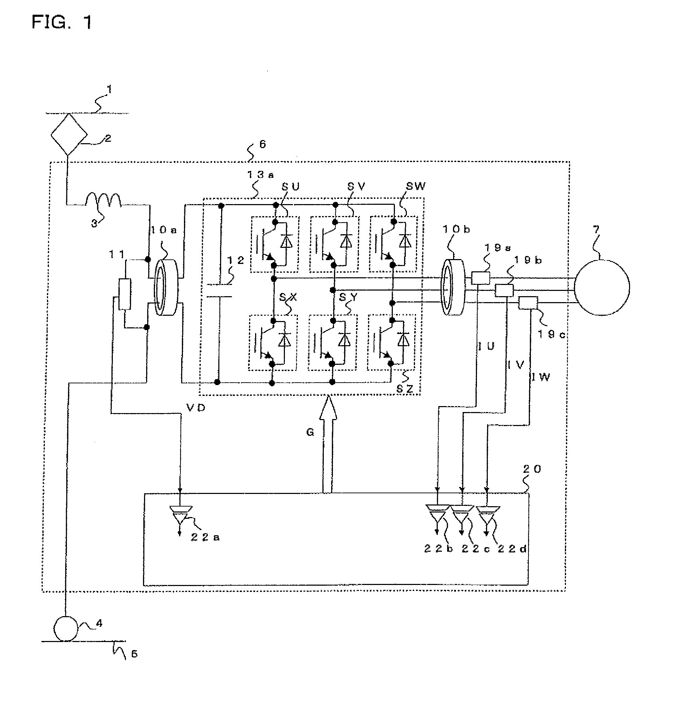

Next, Embodiments of the present invention will be explained. Embodiment 1
FIG. 1 is a block diagram illustrating an electric power converter according to Embodiment 1 of the present invention; constituent elements the same as or similar to those in the technologies as bases of the present invention are designated by the same reference characters.

In foregoing technology 1 as a basis of the present invention, the voltage detector 11 is connected between the input-side conductors of the inverter module 13b, at the output side of the first core 10a, i.e., at the inverter module 13b side of the first core 10a; however, as illustrated in FIG. 1, in an electric power converter according to Embodiment 1 of the present invention, the voltage detector 11 is connected between the input-side conductors of the inverter module 13a, at the input side of the first core 10a, i.e., at a place opposite to the inverter module 13a with respect to the first core 10a. The first core 10a has an impedance only against a common-mode noise current; therefore, even though the voltage detector 11 is connected between the input-side conductors of the inverter module 13a, at the input side of the first core 10a, i.e., at a place opposite to the inverter module 13a with respect to the first core 10a, the voltage across the capacitor 12 can be detected.

Additionally, in technology 1 as a basis of the present invention., the current detectors 19a to 19c are disposed inside the case of the inverter module 13b in such a way as to be on the output-side conductors of the inverter module 13b, at the input side of the second core 10b, i.e., at the inverter module 13b side of the second core 10b; however, in an electric power converter according to Embodiment 1 of the present invention, the current detectors 19a to 19c are provided on the output-side conductors of the inverter module 13a at the output side of the second core 10b, i.e., at a place opposite to the inverter module 13a with respect to the second core 10b. The current detectors 19a to 19c are disposed outside the inverter module 13a.

The switching devices SU to SZ in Embodiment 1 are formed of an intelligent power module (referred to an TPM, hereinafter) or a power module integrated with a gate driver having an excessive-current protection function.

An IPM or a power module integrated with a gate driver having an excessive-current protection function has a function of detecting an excessive current due to short-circuiting or a short-to-ground fault of the output conductor thereof and automatically turning off switching operation; therefore, it is not required to detect the excessive current through the current sensors 19a to 19c and turn off the switching operation by the intermediary of the control unit 20, whereby protective operation against the excessive current can rapidly and securely be performed.

Accordingly, although, in Embodiment 1 of the present invention, the current sensors 19a to 19c are provided at the output side, (the motor side) of the second core 10b, which is away from the switching devices SU to SZ, it is made possible to protect the switching devices SU to SZ, even though there occurs short-circuiting or a short-to-ground fault of a wiring conductor between the switching devices SU to SZ and the current sensors 19a to 19c. In other words, in the case where there occurs short-circuiting or a short-to-ground fault at a position (near to the switching devices SU to SZ) that is closer to the power source than the current sensors 19a to 19c are, no current flows in the current sensors 19a to 19c in the technology as a basis of the present invention; therefore, because the current sensors 19a to 19c cannot detect short-circuiting, a short-to-ground fault, or the like, the switching devices cannot be turned off, whereby the electric power converter is likely to break. However, in the configuration according to Embodiment 1 of the present invention, the switching devices SU to SZ themselves have an excessive-current protection function; thus, it is made possible to turn off the switching devices SU to SZ so as to avoid the breakage of the electric power converter, even in the case where there occurs short-circuiting or a short-to-ground fault of a wiring conductor between the switching devices SU to SZ and the current sensors 19a to 19c.

### Embodiment 2

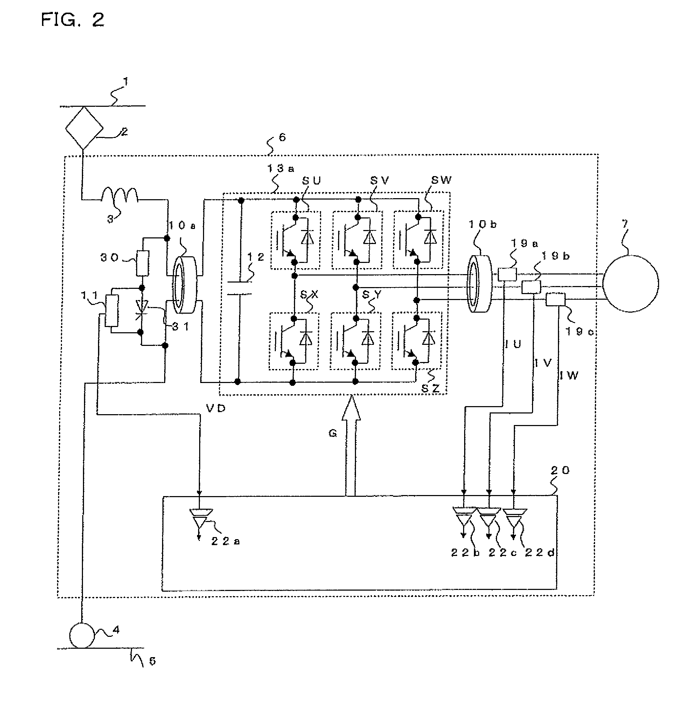

FIG. 2 is a block diagram illustrating an electric power converter according to Embodiment 2 of the present invention. In FIG. 2, the discharging resistor 30 and the discharging device 31 are connected in series and configure an overvoltage-suppression discharging circuit. The overvoltage-suppression discharging circuit is connected in parallel with the capacitor 12. The voltage detector 11 is connected across the discharging device 31.

In foregoing technology 2 as a basis of the present invention, the voltage detector 11 is disposed at the output side of the first core 10a; however, as illustrated in FIG. 2, in an electric power converter according to Embodiment 2 of the present invention, the voltage detector 11 is disposed at the input side of the first core 10a. The first core 10a has an impedance only against a common-mode noise current; therefore, even though disposed at the input side of the first core 10a, the voltage detector 11 can detect the voltage across the capacitor 12.

In technology 2 as a basis of the present invention, the current detectors 19a to 19c are disposed at the input side of the second core 10b and inside the case of the inverter module 13b; however, in the electric power converter according to Embodiment 2 of the present invention, the current detectors 19a to 19c are disposed at the output side of the second core 10b and outside the inverter module 13a. Other configurations are the same as those in Embodiment 1.

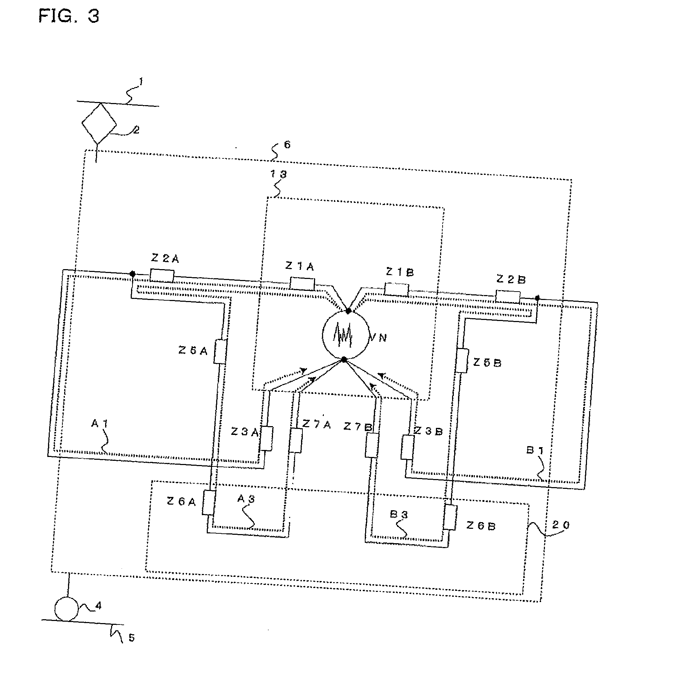

FIG. 3 is an explanatory diagram illustrating an equivalent circuit for a common-mode noise current in an electric power converter according to any one of Embodiments 1 and 2 of the present invention. In addition, in order to comprehend the phenomenon, the equivalent circuit illustrated in FIG. 3 is represented in a simplified manner, without impairing the physical significance. In FIG. 3, VN denotes a common-mode noise voltage generated by a voltage change due to the switching operations of the switching devices SU to SZ; as the paths of a common-mode noise current generated by the common-mode noise voltage VN, four paths A1, A3, B1, and B3 are conceivable.

Because the paths A1 and B1 are the same as those in FIG. 6 explained in the technology as a basis of the present invention, explanations therefor will be omitted. In Embodiments 1 and 2 of the present invention, instead of the paths A2 and B2 in technology 1 and technology 2 as bases of the present invention, there are provided the paths A3 and B3, respectively.

### (1) Path A3

The path A3 is formed of a series circuit including an impedance Z1A between the switching devices SU to SZ and the first core 10a, an impedance Z2A of the first core 10a, an impedance Z5A of the voltage detector 11, an impedance Z6A of a circuit that starts from the voltage detector 11 and leads to the control unit 20 via the insulated amplifier 22a, and an impedance Z7A of a circuit that starts from the control unit 20 and returns to the source of common-mode noise via the case of the electric power converter 6.

### (2) Path B3

The path B3 is formed of a series circuit including an impedance Z1B between the switching devices SU to SZ and the second core 10b, an impedance Z2B of the second core 10b, an impedance Z5B of the current detectors 19a to 19c, an impedance Z6B of a circuit that starts from the current detectors 19a to 19c and leads to the control unit 20 via the insulated amplifiers 22b to 22d, and an impedance Z7B of a circuit that starts from the control unit 20 and returns to the source of common-mode noise via the case of the electric power converter 6.

In comparison with the paths A2 and B2 in technologies (in FIG. 6) as based of the present invention, it can be seen that, in the paths A3 and B3 in Embodiment 2 of the present invention, the impedance Z4A of the circuit between the switching devices SU to SZ and the voltage detector 11 becomes the impedance Z1A of the circuit between the switching devices SU to SZ and the first core 10a (Z1A > Z4A), the impedance Z4B of the circuit between the switching devices SU to SZ and the current detectors 19a to 19c becomes the impedance Z1B of the circuit between the switching devices SU to SZ and the second core 10b (Z1B > Z4B), and the impedance Z2A of the first core 10a and the impedance Z2B of the second core 10b are increased. That is to say, it can be seen that, in Embodiment 2 of the present invention, the first and second cores 10a and 10b, which are originally provided for suppressing a common-mode noise current that flows toward the outside of the electric power converter 6, can also suppress a common-mode noise current that flows to the control unit 20.

As described above, in an electric power converter according to any one of Embodiments 1 and 2 of the present invention, the voltage across the capacitor 12 can be detected; in the case where there occurs an abnormality such as short-circuiting or a short-to-ground fault of the conductors as the output lines of the inverter module 13a, it is made possible to maintain an excessive-current protection function of securely detecting the abnormality and interrupting the switching operation; and a common-mode noise current can be suppressed, without enlargement of components, increase in the number of components, and a cost hike being caused, e.g., by providing a noise suppression means in the voltage detector 11 or the current detector 19a to 19c. Therefore, there can be obtained an electric power converter that can ensure stable operation even though a low-voltage-operation microcomputer of these days is utilized.

The configurations described in Embodiments 1 and 2 are examples of the aspects of the present invention and can be combined with other publicly known technologies; it goes without saying that various features of the present invention can be configured, by modifying, for example, partially omitting the foregoing embodiments, without departing from the scope and spirit of the present invention.

For example, in Embodiments 1 and 2 of the present invention, there has been explained an example in which a voltage detector is disposed at the input side of an inverter module, and current detectors are disposed at the output side of the inverter module; however, it goes without saying that the current detectors may be disposed at the input side of the inverter module, and the voltage detector may be disposed at the output side of the inverter module. Moreover, an electric quantity detector may be provided at a place opposite to the inverter module with respect to only one of the first core 10a and the second core 10b. Still moreover, a switching device having no excessive-current protection function may be utilized.

The present invention may be applied to an electric power converter configured in such a way that AC power is supplied from a power collector, the AC power is converted into DC power by a converter, and then the DC power is inputted to an inverter module. Additionally, it is also possible to apply the present invention to a so-called auxiliary power source apparatus in which loads such as a vehicle air conditioner and an illumination apparatus are connected to the output terminal of an electric power converter via devices other than a motor, e.g., a transformer and a smoothing circuit, and the electric power converter is operated with a constant voltage and at a constant frequency so that constant-voltage and constant-frequency power is supplied to the loads.

### Industrial Applicability

An electric power converter according to the present invention can be applied not only to an electric vehicle but also to various related fields such as fields of electric automobiles, elevators, and electric systems.

## Claims

1. An electric power converter comprising:
an inverter circuit that converts DC power supplied to input terminals thereof into AC power and supplies the AC power to a load connected with output terminals thereof;
a capacitor connected with the input terminal of the inverter circuit;
a noise suppression means that is provided around at least one of input-side conductors connected with the input terminals of the inverter circuit and output-side conductors connected with the output terminals of the inverter circuit;
an electric quantity detector that is provided in the input-side conductors or the output-side conductors at a position opposite to the inverter circuit with respect to the noise suppression means; and
a control unit that controls the inverter circuit, based on an electric quantity detection signal from the electric quantity detector.

2. The electric power converter according to claim 1, wherein there is provided an overvoltage-suppression discharging circuit that is connected with the input-side conductors at a position opposite to the inverter circuit with respect to the noise suppression means.

3. The electric power converter according to claim 1, wherein the noise suppression means is formed of a ring-shaped magnetic material and the hollow portion thereof is penetrated by the conductors.

4. The electric power converter according to claim 1, wherein the inverter circuit is configured with a plurality of semiconductor switching devices that are switched and controlled through a switching signal generated by the control unit, and the control unit generates the switching signal, based on the electric quantity detection signal from the electric quantity detector.

5. The electric power converter according to claim 4, wherein each of the semiconductor switching devices has an excessive-current protection function.

6. The electric power converter mounted in an electric vehicle, according to any one of claims 1 to 5, wherein the input terminal of the inverter circuit is connected with an overhead line via a power collector, and the output terminals of the inverter circuit are connected with a motor that drives the electric vehicle.
